# EUROPEAN PATENT APPLICATION

(11) **EP 1 679 609 A1**
(43) Date of publication of application: **12.07.2006**
(21) Application number: 05000315.1
(22) Date of filing: 10.01.2005
(51) Int. Cl.: G06F 13/36, G06F 13/38

(54) **Multifunction adapter**

(71) Applicant: AboCom Systems, Inc., Hsin-Chu, 300 Taiwan (TW)
(72) Inventor: Tsai, Wen-Jiunn, Hsinchu City 300 (TW); Yang, Wei-Tung, Miaoli City Miaoli County (TW); Ko, Yong-Qin, Jhubei City Hsinchu City (TW); Weng, Ko-Yun, Hsinchu City (TW)
(74) Representative: Winkler, Andreas Fritz Ernst

(57) **Abstract**

The present invention discloses a multi-function interface card. The multi-function interface card comprises a central processor mounted on a PCB (printed circuits board). A communication module is coupled to the central processor. An arbitrator is coupled to the central processor. An interface is coupled to the arbitrator to act as I/O for exchanging signal between the multi-function interface card and an external device. A plurality of switches are included, wherein each one of the plurality of switches is coupled to the arbitrator respectively. A plurality of controllers are included, wherein each one of the plurality of controllers is coupled to corresponding one of the plurality of switches respectively. The arbitrator is capable of recognizing a configuration access from an input signal received by the arbitrator and to determine which one switch of the plurality of switches is turned off thereby allowing the corresponding function controller to respond to the data access.

## Description

### FIELD OF THE INVENTION

The present invention relates to an interface card or an adapter, and more specially, to a multi-function interface card having an arbitrator for recognizing a configuration access from an input signal received by the arbitrator.

### DESCRIPTION OF RELATED ART

Conventionally, prior to power management specifications, PCI devices in portable notebook computers supported the following power states: (1) power on state, (2) power off state, (3) low power (sleep) state accomplished by turning off internal clock signals and (4) a suspended state by powering off most of the system power. However, this approach has numerous limitations. For example, a device which has an internal clock (for example, an internal PLL generated clock) may take an extended time to bring the clock back on to a powered state before the device can be accessed.

In case of performing a failure analysis of a personal computer (hereafter abbreviated to "PC") at an arbitrary time during its development/production/operational phase, a PCI bus analyzer or exerciser is often used for inspecting transactions on a (primary) PCI bus as a system bus of the PC to investigate a failure mode.

Furthermore, in current semiconductor systems, it is common for a PCI bus or cardbus PC card to be used as an interface between circuits. In general, the PCI bus is used as an interface to transmit data at high speeds, whereas the cardbus PC card is an interface that adopts a PCI bus structure due to restrictions on the transmission bandwidth of a conventional personal computer memory card international association (PCMCIA) card.

Most PCI cards or cardbus PC cards simply process data using only a digital signal processor without a central processing unit (CPU). Since there is a need for data to be processed at higher speeds and managed more effectively, system-on-a-chip (SOC)-type systems that include CPUs have been developed.

In the case of a PCI system, a plurality of PCI cards are connected to a PCI bus. A HOST/PCI bridge is installed between the CPU of a host system and the PCI bus, and a plurality of PCI cards may be connected to the PCI bus. A cardbus PC card system may have a connection structure similar to that of the PCI system.

An SOC-type PCI interface chip including a CPU may be used in a PCI card. In the PCI card, a configuration register of a PCI interface unit must be initialized to a predetermined state. A configuration register of the PCI card must also be initialized to a predetermined state. Besides, U.S. Pat. No. 6,256,692 invented by Yoda, Hideaki, Suganuma and Shigemitsu and assigned to Fujitsu Limited, disclosed a CardBus interface circuit, and a CardBus PC having the same.

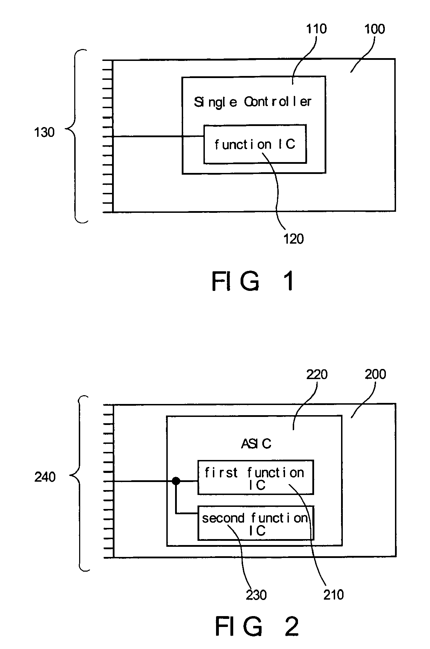

In the conventional cardbus interface, a single function interface card 100 with plurality of pins 130 only needs a single controller 110 with a single function IC ( Integrated Circuit ) 120, as shown Fig.1. This type of the interface card may only perform one function, the performance is restricted. Please refer to Figure 2, a multi-function interface card 200 with plurality of pins 240 includes an ASIC ( Application Special Integrated Circuit ) chip or controller 220 embedded in the multi-function interface card 200 to integrate some controllers IP such that the ASIC ( Application Special Integrated Circuit) chip 220 is capable of executing multi-function. The ASIC 220 includes a first function IC 210 and a further function IC 230. In the example, the first function IC 210 may perform a function indicated by function 0, similarly, the function IC 230 is denoted by function 1 to perform other function different from the one of the first function IC 210. Besides, in the prior art of PCI-to-PCI bridge type, a PCI-to-PCI bridge and a plurality of single function controllers are configured onto the interface card.

As above-mentioned, the multi-function interface card needs to implant an ASIC ( Application Special Integrated Circuit ) chip on the multi-function interface card, and the manufacture of the ASIC ( Application Special Integrated Circuit) chip needs higher cost and the manufacturing process of the ASIC (Application Special Integrated Circuit ) chip is very complicated. If one of the first function IC 210 and the second function IC 230 is failed, to replace the failure one is impossible. One has to replace entire ASIC or controller. Therefore, the conventional multi-function interface card will substantially raise the cost and process cycle. Furthermore, the conventional one can not provide the benefit of replacing the failure one rather than entire controller.

In view of the aforesaid problems of the prior art, it is an object of this invention to provide a multi-function interface card without the ASIC ( Application Special Integrated Circuit ) chip formed onto the interface card to reduce the manufacturing cost and process cycle of the multi-function interface.

### SUMMARY OF THE INVENTION

The object of the present invention is to disclose a controlling module of a multi-function interface card having an arbitrator for recognizing a configuration access from an input signal received by the arbitrator.

The present invention discloses a controlling module of a multi-function interface card. The controlling module of a multi-function interface card comprises an arbitrator mounted on a substrate such as a PCB (printed circuits board) or the like. A plurality of switches are included, wherein each one of the plurality of switches is coupled to the arbitrator respectively. A plurality of function controllers are coupled to the arbitrator via the corresponding switches, respectively. The arbitrator is capable of recognizing a configuration access from an input signal received by the arbitrator and determine which one switch of the plurality of switches is turned off thereby allowing the corresponding function controller to respond to the data access.

The present invention also discloses a multi-function interface card. The multi-function interface card comprises multiple controllers mounted on a PCB (printed circuits board). Any dedicated module or circuit, for example RF module, is coupled to the controllers. An arbitrator is coupled to the controllers. An interface is coupled to the arbitrator and controllers to act as I/O for exchanging signal between the multi-function interface card and an external device. A plurality of switches are included, wherein each one of the plurality of switches is coupled to the arbitrator respectively. A plurality of function controllers are included, wherein each one of the plurality of controllers is coupled to corresponding one of the plurality of switches, respectively. The arbitrator is capable of recognizing a configuration access from an input signal received by the arbitrator and determine which one switch of the plurality of switches is turned off thereby allowing the corresponding function controller to respond to the data access.

A method for controlling a multi-function interface card, comprising:
receiving a signal from an input port of the multi-function interface card;
determining to activate a first function controller or a second function controller, if the determination is activated the first function controller, turning on a switch of the first function controller, then activating the first function controller, and then waiting until all data transmitted;
if the determination is activated the second function controller, turning on a switch of the second function controller, then activating the second function controller; and
reading a PCI configuration of the signal, if the PCI configuration can be identified, then forcing the second function controller to be activated, and then waiting until all data transmitted, if the PCI configuration can not be identified, then waiting until all data transmitted.

The method for controlling a multi-function interface card, comprising:
providing an arbitrator mounted in the multi-function interface card;
providing a plurality of controllers, each one of the plurality of controllers coupling to the arbitrator respectively;
recognizing a configuration access from an input signal by the arbitrator; and
allowing the corresponding function controller to respond to the data access.

These and other features of the present invention and advantages will be more clearly understood from the drawings and description of a

### preferred embodiment.

### BRIEF DESCRIPTION OF THE DRAWINGS

The foregoing aspects and many of the attendant advantages of this invention will become more readily appreciated as the same becomes better understood by reference to the following detailed description, when taken in conjunction with the accompanying drawings, wherein:
FIG. 1 illustrates an example of single function interface card according to prior art.
FIG. 2 illustrates an example of multi-function interface card according to prior art.
FIG. 3 illustrates an example of multi-function interface card according to the present invention.
FIG. 4 illustrates an example of flow according to the present invention.

### DETAILED DESCRIPTION OF THE PREFERRED EMBODIMENTS

In the following description, numerous specific details are provided, such as the identification of various system components, to provide a thorough understanding of embodiments of the invention. However, one skilled in the art will recognize that the invention can be practiced without one or more of the specific details, or with other methods, components, materials, etc. In still other instances, well-known structures, materials, or operations are not shown or described in detail to avoid obscuring aspects of various embodiments of the invention.

In the embodiment, one controller capable of recognizing configuration access is added into the interface card such as the controller may allow designed data flow to a designation controller. As know in the art of interface card, a central processor (not shown) maybe mounted on a substrate and a communication module (not shown) maybe coupled to the central processor. They are not the aspect of the present invention, the description is omitted. The application of the present invention includes but not limited to the network card, sound effect card, I/O card, PCI interface card or adaptor, CardBus interface card.

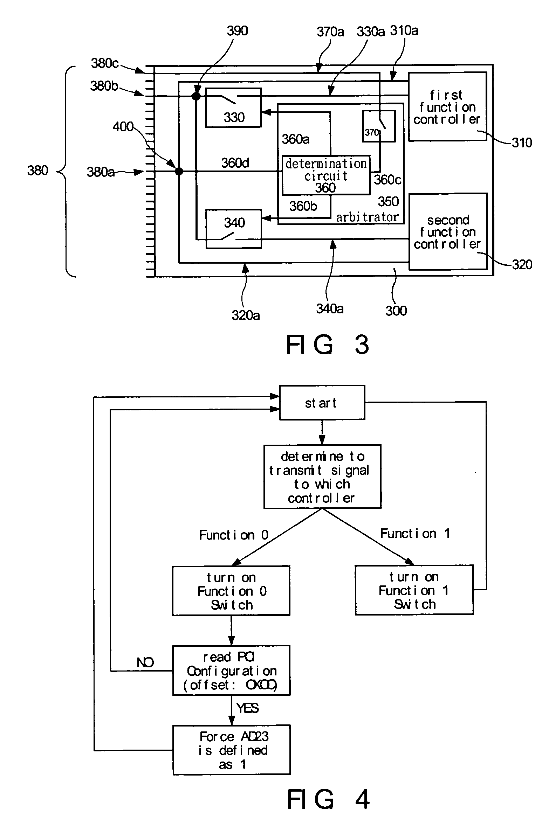

As shown in Figure 3, the multi-function interface card 300 includes a plurality of pins or terminals 380 attached at one end of the interface card 300 for signal communication between a computer system and a peripheral device as know in the art. An arbitrator 350 is formed on a substrate (not shown) in the multi-function interface card 300. The arbitrator 350 that is capable of recognizing configuration access is added into the interface card such that allowing data flow to a designation controller. The arbitrator 350 may determine to active which controller in the multi-function interface card 300. The arbitrator 350 includes a determination circuits 360 coupling to at least one signal input port or terminal such as port 380a via a connection or wire 360d. A first switch 330 is in the multi-function interface card 300 and coupled to the determination circuits 360 via a connection or wire 360a. Similarly, a second switch 340 is in the multi-function interface card 300 and coupled to the determination circuits 360 via a connection or wire 360b. The determination circuits 360 will determine which one of the switches 330, 340 is on or off depending on the carried signal transmitted from the plurality of pins 380, especially the signal from the signal input ports 380a and 380b. One end of the first switch 330 is connected to the signal input port 380b via a first node 390. As well as the second switch 340 is couples to the signal input port 380b via the first node 390. The input signal is send to the determination circuits 360 from the signal input ports 380a via the second node 400.

A first function controller 310, in the example, controls the function indicated by function 0, which is coupled to the first switch 330 via a wire or connection 330a. A second function controller 320 is coupled to the second switch 340 via a wire or a connection 340a. Preferably, the second function controller 320 controls the function indicated by function 1 for example. A connection or wire 310a is used to connect the first function controller 310 to the signal input ports 380a via the node 400. The controller 320 connected a connection or wire 320a is coupled to the signal input ports 380a via also the node 400. A further switch 370 is also in the arbitrator 350, and is coupled to the determination circuits 360 through the wire or connection 360c. The determination circuits 360 will control the on or off state of the third switch 370. The other end of the third switch 370 is coupled to one output port 380c of the plurality of pins 380 through a wire or a connection 370a.

Please refer to Figure 4, the system is related to input the signal to the determination circuits 360 of the arbitrator 350. There is an index or command in the transmitted signal to allow the determination circuits 360 to determine to active which function controller via a corresponding switch in the multi-function interface card 300. In other words, the determination circuits 360 will decide to transmit the signal to which controller. If the indication or the instruction is to active function one controller, then the switch 340 will be turned on and all other function switches be turned off, thereby allowing the signal from the ports 380a and 380b may feed into the function controller 320. If the indication is to active function zero for example, then the switch 330 will be turned on and all other function switches be turned off. In the same way, signal input from the ports 380a and 380b may feed into the controller 310. The next step after the switch 330 is turned on, the arbitrator 350, namely the determination circuits 360 reads the PCI configuration of the signal. If the configuration cycle is accessing 14^{th} byte, the system force that AD23 is defined as 1, and then wait until all data transmitted, otherwise directly wait until all data transmitted. Next, it is turned on all switches and back to the initial step. AD23 is an address/data signal on the pins 380.

The determination circuits 360 communicates with the central processor of the interface card system through the output port 380c via wire 370a.

As described above, the present invention has several advantages as follow:
One arbitrator capable of recognizing configuration access is added into the interface card such as the arbitrator may allow designed data flow to a designation controller. Therefore, the present invention may increase the performance and function of one single interface card with multi-function by implanting the controller capable of recognizing configuration access.

The function number and configuration number of the present invention are not the same with the PCI-to-PCI bridge type. The cost of manufacture is not as low as the present invention.

If the user want to change the controller with an alternative function, it can be replaced alone without influencing other one. The cost is reduced due to the present invention works by the existing IC without developing another IC. From the aspect of the present invention, the consumer may use the multi-function card to replace other individual cards.

While the invention is described and illustrated here in the context of a limited number of embodiments, the invention may be embodied in many forms without departing from the spirit of the essential characteristics of the invention. The illustrated and described embodiments are therefore to be considered in all respects as illustrative and not restrictive. Thus, the scope of the invention is indicated by the appended claims rather than by the foregoing description, and all changes which come within the meaning and range of equivalency of the claims are intended to be embraced therein.

## Claims

1. A controlling module of a multi-function interface card, comprising:
an arbitrator mounted on a substrate; and
a plurality of controllers, each one of said plurality of controllers coupling to said arbitrator, respectively;
wherein said arbitrator is capable of recognizing a configuration access from an input signal received by said arbitrator and determine to transmit a data flow to which one of said plurality of controllers for executing a function.

2. The controlling module according to claim 1, wherein said arbitrator include a determination circuits.

3. The controlling module according to claim 1, further comprising a plurality of switches, each one of said plurality of switches coupling to said arbitrator, respectively, and wherein each one of said plurality of switches is coupled to a corresponding one of said plurality of controllers, respectively.

4. The controlling module according to claim 2, further comprising a plurality of switches, each one of said plurality of switches coupling to said determination circuits, respectively, and wherein each one of said plurality of switches is coupled to a corresponding one of said plurality of controllers, respectively.

5. The controlling module according to claim 3, wherein the number of said plurality of switches is at least two, and wherein the number of said plurality of controllers is at least two.

6. A multi-function interface card, comprising:
an arbitrator formed on a substrate in said multi-function interface card;
an interface coupled to said arbitrator to act as I/O for exchanging signal;
a plurality of switches, each one of said plurality of switches coupling to said arbitrator respectively; and
a plurality of function controllers, each one of said plurality of function controllers coupling to corresponding one of said plurality of switches respectively;
wherein said arbitrator is capable of recognizing a configuration access from an input signal received by said arbitrator and to determine which one switch of said plurality of switches is turned off thereby allowing the corresponding function controller to respond to the data access.

7. The multi-function interface card according to claim 6, wherein said arbitrator further comprises:
a determination circuit coupled to said plurality of switches; and
a switch coupled to said determination circuit and said interface.

8. The multi-function interface card according to claim 6, wherein the number of said plurality of switches is at least two, and wherein the number of said plurality of controllers is at least two.

9. A method for controlling a multi-function interface card, comprising:
providing an arbitrator mounted in said multi-function interface card;
providing a plurality of controllers, each one of said plurality of controllers coupling to said arbitrator, respectively;
recognizing a configuration access from an input signal by said arbitrator; and
allowing a corresponding said controller to respond to a data access recognized by said arbitrator.

10. The method according to claim 9, further comprising providing a plurality of switches, each one of said plurality of switches coupling to said arbitrator, respectively, and each one of said plurality of switches is coupled to a corresponding one of said plurality of controllers, respectively.

11. The method according to claim 9, further comprising a step of determining which one of said plurality of controllers is activated.

12. A method for controlling a multi-function interface card, comprising:
receiving a signal from an input port of said multi-function interface card;
determining to active which controller; and
reading a PCI configuration of said signal, if said PCI configuration can be identified, then forcing one controller to be activated.

13. A method for controlling a multi-function interface card, comprising:
receiving a signal from an input port of said multi-function interface card;
determining to activate a first function controller or a second function controller, if said determination is activated said first function controller, turning on a switch of said first function controller, then activating said first function controller, and then waiting until all data transmitted;
if said determination is activated said second function controller, turning on a switch of said second function controller, then activating said second function controller; and
reading a PCI configuration of said signal, if said PCI configuration can be identified, then forcing said second function controller to be activated, and then waiting until all data transmitted, if said PCI configuration can not be identified, then waiting until all data transmitted.

14. The method according to claim 13, further comprising a step of turning on all switches and feedback to step of said receiving a signal after step of said waiting until all data transmitted.
